# EUROPÄISCHE PATENTSCHRIFT

(11) **EP 0 673 681 B1**
(45) Veröffentlichungstag und Bekanntmachung des Hinweises auf die Patenterteilung: **07.10.1998**
(21) Anmeldenummer: 95890065.6
(22) Anmeldetag: 23.03.1995
(51) Int. Cl.: B03B 4/00, C22B 1/00, C21B 13/00

(54) **Verfahren zum Aufbereiten von Feinerz**
Method of treating fine ore
Procédé pour le traitement des minerais fins

(30) Priorität: 24.03.1994 AT 627/94
(43) Veröffentlichungstag der Anmeldung: 27.09.1995
(73) Patentinhaber: VOEST-ALPINE Industrieanlagenbau GmbH (HRB 6375), A-4020 Linz (AT); Brifer International Ltd., Bridgetown (BB)
(72) Erfinder: Oberndorfer, Ernst, A-4060 Leonding (AT); Tessmer, Gero, A-4040 Linz (AT); Weidinger, Rudolf, A-4040 Linz (AT); Whipp, Roy Hubert, Jr., Miami, Fl. 33176 (US)
(74) Vertreter: Kopecky, Helmut, Dipl.-Ing. Kopecky & Schwarz Patentanwälte

(56) Entgegenhaltungen:
- EP-A- 0 149 865
- EP-A- 0 571 358
- EP-B- 0 010 627
- CH-A- 318 904
- DE-A- 1 458 755
- DE-B- 1 224 933
- DE-B- 2 434 917
- US-A- 5 082 251
- DE-A-D906VI/40a (The Dorr Company)

## Beschreibung

Die Erfindung betrifft ein Verfahren zum Aufbereiten von Feinerz, wobei das Feinerz mit Hilfe eines die Erzpartikel des Feinerzes umströmenden heißen Trocknungsgases getrocknet wird, das Trocknungsgas nach dem Umströmen der Erzpartikel unter Abgabe von mitgerissenen Staub-Erzpartikeln gereinigt wird und die Staub-Erzpartikel gesammelt und dem getrockneten Feinerz zugemischt werden, sowie eine Anlage zur Durchführung des Verfahrens.

Ein Verfahren dieser Art ist aus der US-A - 5,082,251 bekannt. Hierbei erfolgt die Trocknung des Feinerzes in einem rotierenden Trommeltrockner.

Schwierigkeiten bereiten bei der Weiterverarbeitung des Feinerzes, wie einer Direktreduktion des Feinerzes, im Feinerz in zu großer Menge enthaltene Staub-Erzpartikel, insbesondere Staub-Erzpartikel mit einer Größe kleiner als 150 µm. Ein zu großer Anteil solcher Staub-Erzpartikel im Feinerz kann zu ernsthaften Prozeßstörungen bei der Weiterverarbeitung führen, verursacht beispielsweise durch Zusetzen von Leitungen, Zyklonen bzw. durch Bildung von Ablagerungen in Reaktorbehältern. Zu solchen Störungen kann es auch dann kommen, wenn der Anteil an Staub-Erzpartikeln zwar insgesamt akzeptabel ist, die Staub-Erzpartikel jedoch im Feinerz stark unterschiedlich verteilt sind. Es können dann Maximalgehalte an Staub-Erzpartikeln auftreten, die erheblich über dem ohne Störungen zu verkaftenden Staub-Erzpartikel-Anteil liegen; solche Maximalgehalt-Anteile können bis über 50 % ausmachen.

Die Erfindung stellt sich die Aufgabe, durch im Feinerz vorhandene zu hohe Anteile von Staub-Erzpartikeln bedingte Verfahrensstörungen beim Weiterverarbeiten des Feinerzes zu vermeiden. Insbesondere sollen stark schwankende Anteile an Staub-Erzpartikeln vermieden werden und soll stets ein etwa konstanter Mengenanteil an Staub-Erzpartikeln, deren Korngrößen eine bestimmte Grenz-Korngröße unterschreiten, im dem Weiterverarbeitungsprozeß unterworfenen Feinerz vorhanden sein, wobei es besonders zweckmäßig ist, wenn eine Deponie von Staub-Erzpartikeln tunlichst vermieden werden kann.

Diese Aufgabe wird bei einem Verfahren der eingangs beschriebenen Art erfindungsgemäß dadurch gelöst,
- daß die Trocknung unter gleichzeitiger Windsichtung des Feinerzes im Wirbelbettverfahren erfolgt, wobei
- das Trocknungsgas durch das Feinerz unter Bildung eines Wirbelbettes hindurchgeleitet wird und
- die Geschwindigkeit des Trocknungsgases in einer Höhe festgelegt wird, bei der ein Mitreißen von Staub-Erzpartikeln, die eine unter einer vorgewählten Größe liegende Größe aufweisen, erfolgt und
- daß die vom Trocknungsgas mitgerissenen Staub-Erzpartikel abgeschieden, gesammelt und in dosierter Menge dem getrockneten Feinerz zugemischt werden.

Durch das Sammeln von Staub-Erzpartikeln gelingt es, einen zeitweilig vorhandenen Überschuß an Staub-Erzpartikeln abzufangen und auszugleichen, wobei die sich ansammelnden Staub-Erzpartikel dem Direktreduktionsprozeß dann zugegeben werden, wenn beim Trocknen weniger Staub-Erzpartikel anfallen, als der Weiterverarbeitungsprozeß verträgt, bzw. weniger Staub-Erzpartikel anfallen, als man beabsichtigt, dem Weiterverarbeitungsprozeß, wie einem Direktreduktionsprozeß, zuzuführen. Der hierdurch erzielte Ausgleich ermöglicht es, auf Deponie zu führende Staub-Erzpartikel-Anteile zu minimieren, wenn nicht gar ganz zu vermeiden.

Aus der EP-A - 0 149 865 ist es bekannt, sulfidische Erze einer Wirbelbett-Trocknung zu unterziehen. Bei diesem bekannten Verfahren wird der gesamte Feststoff zusammen mit dem Austrittsgas der Wirbelbett-Trocknung über eine Leitung einer Gasreinigung zugeführt, wobei die bei der Reinigung abgeschiedenen Feststoffe den vorher abgeschiedenen Feststoffen ohne Beachtung der Korngrößen zugemischt werden. Eine Windsichtung ist somit hier nicht vorgesehen.

Aus der CH-B - 318.904 ist es bekannt, Erzoxide zu einem feinen Pulver zu zermahlen und das anfallende Mahlgut einer Windsichtung zu unterwerfen, wobei man zur Windsichtung reduzierendes Gas verwendet. Das bei der Windsichtung zurückbleibende gröbere Eisenpulver wird wiederum dem Mahlvorgang zugeführt, so daß für die Reduktion des Erzes ausschließlich gleichmäßig feine Pulvererzpartikel zur Verfügung stehen.

Die DE-A - 1 458 755 betrifft ein Verfahren zum Steuern der Korngrößenverteilung und der Feinkornkonzentration in Wirbelschicht-Reaktionszonen. Hierbei wird eine Feinkornkonzentration in der Wirbelschicht im Bereich zwischen 5 bis 60 Gew.% eingestellt, u.zw. dadurch, daß Feinkorn mit einem bestimmten Korngrößenbereich aus der Wirbelschicht abgezogen und in bestimmter Menge im Kreislauf wieder in die Wirbelschicht zurückgeleitet wird. Hierbei geht es darum, eine Anreicherung der Feinkornmenge in der Wirbelschicht-Reaktionszone infolge einer durch Abrieb in dieser Zone verursachten Feinkorn-Neubildung zu begegnen. Dieses Verfahren betrifft also keine Aufbereitung des Feinerzes, sondern ein Verfahren während dessen Reduktion.

Vorteilhaft wird erfindungsgemäß auch das getrocknete Feinerz nach Austritt aus dem Wirbelbett gesammelt und in dosierter Menge mit den in dosierter Menge zugeführten Staub-Erzpartikeln gemischt. Hierdurch kann ein gleichmäßiger Strom an getrocknetem Feinerz der Zumischung der getrockneten Staub-Erzpartikel zur Verfügung gestellt werden.

Zweckmäßig erfolgt das Mischen des getrockneten Feinerzes mit den Staub-Erzpartikeln in einem Mengen-Verhältnis in einem Bereich zwischen 90 : 10 bis 70 : 30, vorzugsweise in einem Bereich zwischen 80 : 20 bis 85 : 15.

Vorteilhaft erfolgt das Mischen des getrockneten Feinerzes mit den Staub-Erzpartikeln unter Einhaltung eines konstanten vorbestimmten Mengen-Verhältnisses, wobei zweckmäßig das Mischen des getrockneten Feinerzes mit den Staub-Erzpartikeln unter Einhaltung einer konstanten Gesamtmenge je Zeiteinheit erfolgt.

Es hat sich gezeigt, daß es für ein Direktreduktionsverfahren, wie es beispielsweise in der USA - 5,082,251 beschrieben ist, besonders zweckmäßig ist, daß die Geschwindigkeit des Trocknungsgases in einer Höhe festgelegt wird, bei der Staub-Erzpartikel, deren Kornrößen kleiner als 200 µm, vorzugsweise kleiner als 150 µm, ist, mitgerissen werden.

Eine Anlage zur Durchführung des Verfahrens ist durch folgende Merkmale gekennzeichnet:
- einen Feinerz-Wirbelbettrockner mit einer Trocknungsgas-Zuführung,
- eine dem Wirbelbetttrockner nachgeordnete Trocknungsgas-Reinigungseinrichtung mit
- einer vom Trocknungsgas mitgerissene Staub-Erzaprtikel vom Trocknungsgas abscheidenden Trenneinrichtung,
- einen die abgeschiedenen Staub-Erzpartikel aufnehmenden Sammelbehälter und
- eine Mischeinrichtung zur Mischung des getrockneten Feinerzes und der vom Trocknungsgas abgeschiedenen Staub-Erzpartikel auf einen vorbestimmten Mengen-Verhältniswert.

Vorteilhaft ist dem Wirbelbetttrockner ein das getrocknete Feinerz aufnehmender Sammelbehälter nachgeordnet.

Zweckmäßig ist dem die abgeschiedenen Staub-Erzpartikel aufnehmenden Sammelbehälter eine Dosierbandwaage für die Staub-Erzpartikel nachgeordnet, wobei weiters vorteilhaft dem das getrocknete Feinerz aufnehmenden Sammelbehälter ebenfalls eine Dosierbandwaage für das getrocknete Feinerz nachgeordnet ist.

Das Trocknungsgas wird vorteilhaft durch Verbrennen eines Gases gebildet, so daß der Wirbelbettrrockner zweckmäßig mit einer der Bildung eines Trocknungsgases dienenden Gasfeuerung, vorzugsweise einer Erdgasfeuerung, ausgestattet ist.

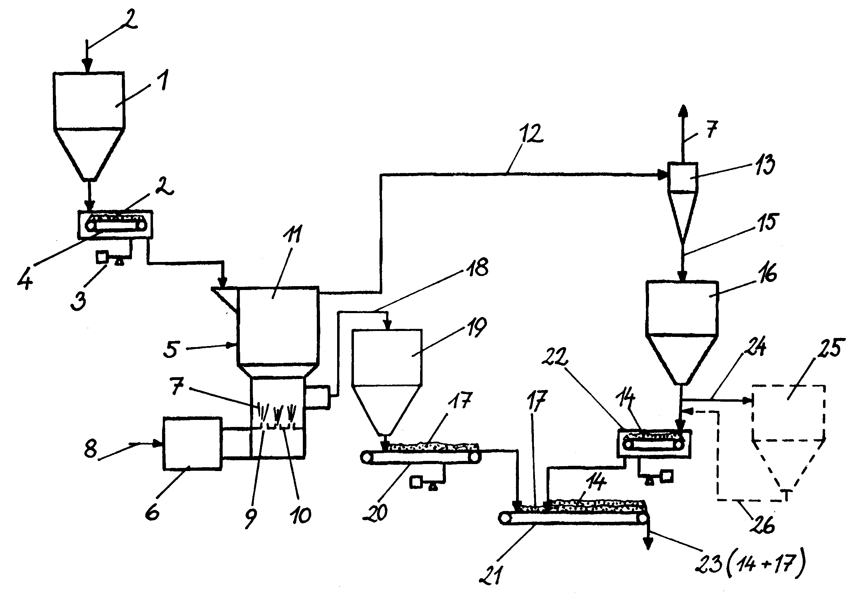

Die Erfindung ist nachfolgend anhand eines in der Zeichnung dargestellten Ausführungsbeispieles näher erläutert, wobei die Zeichnung ein Verfahrensschema nach einer bevorzugten Ausführungsform zeigt.

Die erfindungsgemäße Anlage weist einen Vorratsbehälter 1 für Feinerz 2, das beispielsweise zur Erzeugung von Eisenschwamm durch eine Direktreduktion mit Hilfe von Reduktionsgas eingesetzt wird, auf. Von dem Vorratsbehälter 1 gelangt das Feinerz 2 über ein mit einer Waage 3 ausgestattetes Dosierband 4 in einen Wirbelbetttrockner 5, der mit einer Gasfeuerung 6 zur Erzeugung eines Trocknungsgases 7 ausgestattet ist. Die Gasfeuerung 6 wird vorteilhaft mit Erdgas 8 betrieben. Das bei der Verbrennung des Erdgases 8 gebildete Trocknungsgas 7 wird über ein mit einer Mehrzahl von Düsen 9 ausgestattetes Verteilergitter 10 dem Innenraum 11 des Wirbelbetttrockners 5 zugeführt, wobei das Trocknungsgas 7 mit einer vorbestimmten Geschwindigkeit aus den Düsen 9 des Verteilergitters 10 austritt. Die Geschwindigkeit des Trocknungsgases 7 kann durch eine Regelung der Gasfeuerung 6 auf den gewünschten Wert eingestellt werden.

Am oberen Ende des Wirbelbetttrockners 5 wird das Trocknungsgas 7 über eine Ableitung 12 einer Trocknungsgas-Reinigungseinrichtung 13, die als Zyklon-Abscheider ausgebildet ist, zugeleitet. In dem Zyklon-Abscheider 13 erfolgt die Abscheidung von mit dem Trocknungsgas 7 mitgerissenen Staub-Erzpartikeln 14, die vom Zyklon-Abscheider 13 über eine Förderleitung 15 einem Sammelbehälter 16 zugeführt werden.

Das im Wirbelbetttrockner 5 getrocknete und von Staub-Erzpartikeln 14 befreite Feinerz 17 gelangt über eine Förderleitung 18 ebenfalls in einen Sammelbehälter 19 und wird von diesem über eine Dosierbandwaage 20 einer Mischeinrichtung 21 zum Mischen des getrockneten Feinerzes 17 mit einem bestimmten Anteil von Staub-Erzpartikeln 14, die ebenfalls über eine Dosierbandwaage 22 der Mischeinrichtung 21 zugeleitet werden, zugeführt. Diese Mischeinrichtung 21 ist als von den beiden Dosierbandwaagen 20, 22 beaufschlagbares Förderband ausgebildet.

Die Funktion der Anlage ist folgende:

Im Wirbelbetttrockner 5 bildet sich unter Zuleitung des über die Düsen 9 des Verteilergitters 10 zugeführten und mit einer bestimmten Strömungsgeschwindigkeit im Innenraum 11 des Wirbelbetttrockners 5 aufsteigenden Trocknungsgases 7 ein Wirbelbett aus, wobei Feinteilchen, wie Staub-Erzpartikel 14, die eine Korngröße unterhalb einer bestimmten Grenzkorngröße aufweisen, durch das Trocknungsgas 14 mitgerissen werden. Die Grenzkorngröße ist von der Strömungsgeschwindigkeit des Trocknungsgases 14 abhängig. Die Strömungsgeschwindigkeit des Trocknungsgases 14 wird hierbei zweckmäßig so gewählt, daß alle Staub-Erzpartikel 14 mit einer Größe unter etwa 150 µm mit dem Trocknungsgas ausgetragen werden. Diese Staub-Erzpartikel 14 werden im Zyklon-Abscheider 13 abgeschieden und dem Sammelbehälter 16 zugeführt.

Mit Hilfe der beiden Dosierbandwaagen 20, 22 wird die Zuführung von getrocknetem Feinerz 17 und getrockneten Staub-Erzpartikeln 14 derart eingestellt, daß ein (bevorzugtes) Mengenverhältnis von getrocknetem Feinerz 17 zu getrockneten Staub-Erzpartikeln 14 von etwa 80 : 20 bis 85 : 15 erzielt wird, wobei die Gesamtmenge der aus getrocknetem Feinerz 17 und Staub-Erzpartikeln 14 gebildeten Feinerzmischung 23 konstant gehalten wird.

Sollte eine allzu große Menge an Staub-Erzpartikeln 14 anfallen, kann ein Teil derselben über eine Zweigleitung 24 auf Deponie geführt werden oder einem weiteren Sammelgefäß 25 zur Zwischenlagerung zugeführt werden, wobei die zwischengelagerten Staub-Erzpartikel 14 mit getrocknetem Feinerz 17 zu einem späteren Zeitpunkt, wenn das dem Wirbelbetttrockner 5 zugeführte ungesichtete Feinerz 2 einmal weniger Staub-Erzpartikel 14 enthält, zugemischt werden kann, wie dies durch die strichlierte Linie 26 angedeutet ist.

Die das Förderband 21 mit pro Zeiteinheit konstanter Menge und mit konstantem Mengenverhältnis: getrocknetes Feinerz 17 zu getrockneten Staub-Erzpartikeln 17 verlassende Feinerzmischung 23 wird anschließend einer Direktreduktionsanlage gemäß US-A - 5,082,251 oder EP-A - 0 571 358 oder EP-B - 0 010 627 zwecks Erzeugung von Eisenschwamm zugeführt.

Das erfindungsgemäße Verfahren erlaubt den problemlosen Ablauf dieser Direktreduktionsverfahren, denn es werden Prozeßstörungen, die aufgrund eines plötzlichen übergroßen Anfalls an Staub-Erzpartikeln 14 verursacht werden könnten, mit Sicherheit vermieden.

In nachstehender Tabelle 1 sind Feinerze I bis IV mit unterschiedlichen Gehalten an Staub-Erzpartikeln (Korngrößen unter 150 µm) aufgelistet:

**Tabelle 1**

| Feinerz | Staub-Erzpartikel % |
|---|---|
| I | 49 |
| II | 35 |
| III | 25 |
| IV | 18 |

Diese Feinerze wurden zur Erzeugung von 70 t/h brikettiertem Eisenschwamm in den in Tabelle 2 wiedergegebenen Mengen (t/h) in den Wirbelbetttrockner 5 eingesetzt (Tabelle 2). Der mit dem Trocknungsgas 7 abgeschiedene Wassergehalt ist ebenfalls in Tabelle 2 angegeben. Mit dem Trocknungsgas 7 wurden die ebenfalls in Tabelle 2 angegebenen Staub-Erzpartikel 14 (Korngrößer kleiner als 150 µm) ausgetragen und im Zyklon-Abscheider 13 abgeschieden.

**Tabelle 2**

| Feinerz | Einsatz t/h | Wassergehalt t/h | Staub-Erzpartikel t/h |
|---|---|---|---|
| I | 168 | 9,80 | 73,1 |
| II | 137 | 8,05 | 44,1 |
| III | 122 | 7,35 | 29,4 |
| IV | 113 | 6,65 | 21,0 |

Von jedem Feinerz I bis IV wurden 86,1 t/g getrocknetes und von Staub-Erzpartikeln 14 befreites Feinerz 17 zusammen mit jeweils 18,9 t/h Staub-Erzpartikeln 14 gemischt (Feinerzmischung 23, Menge 105 t/h) und einem Direktreduktionsverfahren, wie in der EP-A -0 571 358 beschrieben, unterzogen:

| | |
|---|---|
| Kohlenstoffzufuhr | 0,7 t/h |
| Sauerstoff abgeschieden | 26,6 t/h |
| Glühverluste | 4,2 t/h |
| Staub abgeschieden | 2,1 t/h |

Es wurden 72,1 t/h Eisenschwamm erzeugt. Die Verluste beim Brikettieren betrugen 2,1 t/h, so daß Eisenschwamm-Briketts in einer Menge von 70 t/h anfielen.

## Patentansprüche

1. Verfahren zum Aufbereiten von Feinerz (2), wobei das Feinerz (2) mit Hilfe eines die Erzpartikel des Feinerzes umströmenden heißen Trocknungsgases (7) getrocknet wird, das Trocknungsgas (7) nach dem Umströmen der Erzpartikel unter Abgabe von mitgerissenen Staub-Erzpartikeln (14) gereinigt wird und die Staub-Erzpartikel (14) gesammelt und dem getrockneten Feinerz (17) zugemischt werden, dadurch gekennzeichnet,
• daß die Trocknung unter gleichzeitiger Windsichtung des Feinerzes (2) im Wirbelbettverfahren erfolgt, wobei
• das Trocknungsgas (7) durch das Feinerz (2) unter Bildung eines Wirbelbettes hindurchgeleitet wird und
• die Geschwindigkeit des Trocknungsgases (7) in einer Höhe festgelegt wird, bei der ein Mitreißen von Staub-Erzpartikeln (14), die eine unter einer vorgewählten Größe liegende Größe aufweisen erfolgt und
• daß die vom Trocknungsgas (7) mitgerissenen Staub-Erzpartikel (14) abgeschieden, gesammelt und in dosierter Menge dem getrockneten Feinerz (17) zugemischt werden.

2. Verfahren nach Anspruch 1, dadurch gekennzeichnet, daß das getrocknete Feinerz (17) nach Austritt aus dem Wirbelbett gesammelt wird und in dosierter Menge mit den in dosierter Menge zugeführten Staub-Erzpartikeln (14) gemischt wird.

3. Verfahren nach Anspruch 1 oder 2, dadurch gekennzeichnet, daß das Mischen des getrockneten Feinerzes (17) mit den Staub-Erzpartikeln (14) in einem Mengen-Verhältnis in einem Bereich zwischen 90 : 10 bis 70 : 30, vorzugsweise in einem Bereich zwischen 80 : 20 bis 85 : 15,erfolgt.

4. Verfahren nach einem oder mehreren der Ansprüche 1 bis 3, dadurch gekennzeichnet, daß das Mischen des getrockneten Feinerzes (17) mit den Staub-Erzpartikeln (14) unter Einhaltung eines konstanten vorbestimmten Mengen-Verhältnisses erfolgt.

5. Verfahren nach einem oder mehreren der Ansprüche 1 bis 4, dadurch gekennzeichnet, daß das Mischen des getrockneten Feinerzes (17) mit den Staub-Erzpartikeln (14) unter Einhaltung einer konstanten Gesamtmenge je Zeiteinheit erfolgt.

6. Verfahren nach einem oder mehreren der Ansprüche 1 bis 5, dadurch gekennzeichnet, daß die Geschwindigkeit des Trocknungsgases (7) in einer Höhe festgelegt wird, bei der Staub-Erzpartikel (14), deren Kornrößen kleiner als 200 µm, vorzugsweise kleiner als 150 µm, sind, mitgerissen werden.

7. Anlage zur Durchführung des Verfahrens nach Anspruch 1, gekennzeichnet durch
• einen Feinerz-Wirbelbetttrockner (5) mit einer Trocknungsgas-Zuführung (9, 10),
• eine dem Wirbelbetttrockner (5) nachgeordnete Trocknungsgas-Reinigungseinrichtung (13) mit
• einer vom Trocknungsgas mitgerissene Staub-Erzaprtikel vom Trocknungsgas abscheidenden Trenneinrichtung (13),
• einen die abgeschiedenen Staub-Erzpartikel (14) aufnehmenden Sammelbehälter (16) und
• eine Mischeinrichtung (21) zur Mischung des getrockneten Feinerzes (17) und der vom Trocknungsgas (7) abgeschiedenen Staub-Erzpartikel (14) auf einen vorbestimmten Mengen-Verhältniswert

8. Anlage nach Anspruch 7, dadurch gekennzeichnet, daß dem Wirbelbetttrockner (5) ein das getrocknete Feinerz (17) aufnehmender Sammelbehälter (19) nachgeordnet ist.

9. Anlage nach Anspruch 7 oder 8, dadurch gekennzeichnet, daß dem die abgeschiedenen Staub-Erzpartikel (14) aufnehmenden Sammelbehälter (16) eine Dosierbandwaage (22) für die Staub-Erzpartikel (14) nachgeordnet ist.

10. Anlage nach Anspruch 8, dadurch gekennzeichnet, daß dem das getrocknete Feinerz (17) aufnehmenden Sammelbehälter (19) eine Dosierbandwaage (20) für das getrocknete Feinerz (17) nachgeordnet ist.

11. Anlage nach einem oder mehreren der Ansprüche 7 bis 10, dadurch gekennzeichnet, daß der Wirbelbettrockner (5) mit einer der Bildung eines Trocknungsgases (7) dienenden Gasfeuerung (6), vorzugsweise einer Erdgasfeuerung, ausgestattet ist.

## Claims

1. A process for treating fine ore (2), wherein the fine ore (2) is dried by aid of a hot drying gas (7) flowing around the ore particles of the fine ore, the drying gas (7), after having flown around the ore particles, is purified while releasing entrained dust ore particles (14) and the dust ore particles (14) are collected and admixed to the dried fine ore (17), characterized in that
• drying is effected in the fluidized bed method under simultaneous wind-screening of the fine ore (2), wherein
• the drying gas (7) is passed through the fine ore (2) under formation of a fluidized bed and
• the speed of the drying gas (7) is fixed at a rate at which entraining of dust ore particles (14) having dimensions below a predetermined dimension is effected, and
• that the dust ore particles (14) entrained by the drying gas (7) are separated, collected and admixed to the dried fine ore (17) in dosed amounts.

2. A process according to claim 1, characterized in that the dried fine ore (17), after having left the fluidized bed, is collected and is mixed in dosed amounts with the dust ore particles (14) fed in dosed amounts.

3. A process according to claim 1 or 2, characterized in that mixing of the dried fine ore (17) with the dust ore particles (14) is effected at a quantitative ratio ranging from 90:10 to 70:30, preferably ranging from 80:20 to 85:15.

4. A process according to one or several of claims 1 to 3, characterized in that mixing of the dried fine ore (17) with the dust ore particles (14) is effected while observing a constant predetermined quantitative ratio.

5. A process according to one or several of claims 1 to 4, characterized in that mixing of the dried fine ore (17) with the dust ore particles (14) is effected while observing a constant overall amount per time unit.

6. A process according to one or several of claims 1 to 5, characterized in that the speed of the drying gas (7) is fixed at a rate at which dust ore particles (14) whose grain dimensions are smaller than 200 µm, preferably smaller than 150 µm, are entrained.

7. An arrangement for carrying out the process according to claim 1, characterized by
• a fine-ore fluidized bed drier (5) comprising a drying-gas feeder (9, 10),
• a drying-gas purification means (13) arranged to follow said fluidized bed drier (5) and comprising
• a separating means (13) separating from the drying gas dust ore particles entrained by the drying gas,
• a collecting vessel (16) receiving the separated dust ore particles (14), and
• a mixing means (21) for mixing the dried fine ore (17) with the dust ore particles (14) separated from the drying gas (7) to a predetermined quantitative ratio.

8. An arrangement according to claim 7, characterized in that a collecting vessel (19) receiving the dried fine ore (17) is arranged to follow said fluidized bed drier (5).

9. An arrangement according to claim 7 or 8, characterized in that a proportioning belt weigher (22) for the dust ore particles (14) is arranged to follow said collecting vessel (16) receiving the separated dust ore particles (14).

10. An arrangement according to claim 8, characterized in that a proportioning belt weigher (20) for the dried fine ore (17) is arranged to follow said collecting vessel (19) receiving the dried fine ore (17).

11. An arrangement according to one or several of claims 7 to 10, characterized in that the fluidized bed drier (5) is equipped with a gas firing (6), preferably a natural gas firing, intended to form a drying gas (7).

## Revendications

1. Procédé de traitement de fines de minerai (2), dans lequel on sèche les fines de minerai (2) à l'aide d'un gaz de séchage chaud (7) qui s'écoule autour des particules de fines de minerai, on épure, après qu'il se soit écoulé autour des particules de minerai, le gaz de séchage (17) qui abandonne les particules poussiéreuses de minerai entraînées (14) et on collecte les particules poussiéreuses de minerai (14) et on les ajoute, en mélangeant, aux fines de minerai séchées (17), caractérisé par le fait
• que le séchage se fait avec séparation pneumatique simultanée des fines de minerai (2) par le procédé à lit fluidisé, dans lequel
• on fait passer le gaz de séchage (7) à travers les fines de minerai (2) en formant un lit fluidisé et
• on établit la vitesse du gaz de séchage (7) à une valeur pour laquelle se fait un entraînement des particules poussiéreuses de minerai (14) qui présentent une dimension inférieure à une dimension prédéterminée et
• que l'on fait se déposer les particules poussiéreuses de minerai (14) entraînées par le gaz de séchage (7), qu'on les collecte et qu'on les ajoute, en mélangeant, en quantité dosée, aux fines de minerai séchées (17).

2. Procédé selon la revendication 1, caractérisé par le fait qu'après leur sortie hors du lit fluidisé, on collecte les fines de minerai (17) séchées et qu'on les mélange, en quantité dosée, avec les particules poussiéreuses de minerai (14) amenées en quantité dosée.

3. Procédé selon la revendication 1 ou 2, caractérisé par le fait que le mélange des fines de minerai séchées (17) avec les particules poussiéreuses de minerai (14) se fait dans un rapport des quantités situé sur une plage entre 90 : 10 et 70 : 30, de préférence sur une plage entre 80 : 20 et 85 : 15.

4. Procédé selon l'une ou plusieurs des revendications 1 à 3, caractérisé par le fait que le mélange des fines de minerai séchées (17) avec les particules poussiéreuses de minerai (14) se fait en respectant un rapport constant, prédéterminé, des quantités.

5. Procédé selon l'une ou plusieurs des revendications 1 à 4, caractérisé par le fait que le mélange des fines de minerai séchées (17) avec les particules poussiéreuses de minerai (14) se fait en respectant une quantité globale constante par unité de temps.

6. Procédé selon l'une ou plusieurs des revendications 1 à 5, caractérisé par le fait que l'on établit la vitesse du gaz de séchage (17) à une valeur pour laquelle sont entraînées des particules poussiéreuses de minerai (14) dont les dimensions granulométriques sont inférieures à 200 µm, de préférence inférieures à 150 µm.

7. Installation pour la mise en oeuvre du procédé selon la revendication 1, caractérisée par
• un sécheur à lit fluidisé (5) pour fines de minerai avec une arrivée du gaz de séchage (9, 10),
• un dispositif d'épuration du gaz de séchage (13) disposé après le sécheur à lit fluidisé (5),
• une installation de séparation (13) qui sépare du gaz de séchage les particules poussiéreuses de minerai entraînées par le gaz de séchage,
• un récipient de collecte (16) qui collecte les particules poussiéreuses de minerai (14) qui se sont déposées et
• un dispositif de mélange (21) pour mélanger, selon un rapport de quantités prédéterminé, les fines de minerai séchées (17) et les particules poussiéreuses de minerai (14) qui se sont déposées à partir du gaz de séchage (7).

8. Installation selon la revendication 7, caractérisée par le fait qu'en aval du sécheur à lit fluidisé (5) est disposé un récipient de collecte (19) qui collecte les fines de minerai séchées (17).

9. Installation selon la revendication 7 ou 8, caractérisée par le fait qu'en aval du récipient de collecte (16) qui collecte les particules poussiéreuses de minerai (14) qui se sont déposées est disposé un tapis doseur à balance (22) pour les particules poussiéreuses de minerai (14).

10. Installation selon la revendication 8, caractérisée par le fait qu'en aval du récipient de collecte (19) qui collecte les fines de minerai séchées (17) est disposé un tapis doseur à balance (20) pour les fines de minerai séchées (17).

11. Installation selon l'une ou plusieurs des revendications 7 à 10, caractérisée par le fait que le sécheur à lit fluidisé (5) est équipé d'un chauffage au gaz (6), de préférence d'un chauffage au gaz naturel, servant à la formation d'un gaz de séchage (7).
